# EUROPÄISCHE PATENTANMELDUNG

(11) **EP 3 906 767 A1**
(43) Veröffentlichungstag der Anmeldung: **10.11.2021**
(21) Anmeldenummer: 21401022.5
(22) Anmeldetag: 04.05.2021
(51) Int. Cl.: A01C 7/04

(54) **VEREINZELUNGSEINRICHTUNG ZUM VEREINZELN VON SAATKÖRNERN**

(30) Priorität: 06.05.2020 DE 102020112177
(71) Anmelder: Amazonen-Werke H. Dreyer SE & Co. KG, 49205 Hasbergen (DE)
(72) Erfinder: Bulmahn, Simon, 26655 Westerstede (DE); Wichmann, Daniel, 26209 Hatten (DE)

(57) **Zusammenfassung**

Die Erfindung betrifft eine Vereinzelungseinrichtung (10, 10a-10d) zum Vereinzeln von Saatkörnern (K), mit einem rotierend antreibbaren Vereinzelungskörper (18), und einem Gehäuse (12), in welchem der Vereinzelungskörper (18) angeordnet ist und welches einen Einlasskanal (16) aufweist, über welchen dem Vereinzelungskörper (18) in das Gehäuse (12) eingeleitete Saatkörner (K) zuleitbar sind, wobei der Einlasskanal (16) einen Endbereich (22) aufweist, welcher zumindest abschnittsweise zerstörungsfrei verformbar ist.

## Beschreibung

Die Erfindung betrifft eine Vereinzelungseinrichtung zum Vereinzeln von Saatkörnern nach dem Oberbegriff des Patentanspruchs 1 und eine Sämaschine nach dem Oberbegriff des Patentanspruchs 14.

Zum Vereinzeln von Saatkörnern weisen einige Sämaschinen eine Vereinzelungseinrichtung mit einem rotierend antreibbaren Vereinzelungskörper auf. Der Vereinzelungskörper kann beispielsweise als Vereinzelungsscheibe ausgebildet sein und ist üblicherweise in einem einen Einlasskanal aufweisenden Gehäuse angeordnet. Über den Einlasskanal sind dem Vereinzelungskörper in das Gehäuse eingeleitete Saatkörner zuleitbar.

Bei einigen Sämaschinen werden die Säaggregate samt Vereinzelungseinrichtungen beim Einklappen der Querträger der Sämaschine von einer Arbeitsstellung in eine Transportstellung verkippt. Üblicherweise werden die Säaggregate einer Maschinenhälfte durch ein Verschwenken eines ersten Querträgers in eine aufrechte Stellung in eine erste Richtung und die Säaggregate der anderen Maschinenhälfte durch ein Verschwenken eines zweiten Querträgers in eine aufrechte Stellung in eine zweite Richtung gekippt. Darüber hinaus sind Sämaschinen bekannt, bei welchen die Querträger samt der an den Querträgern befestigten Säaggregate beim Einklappen der Querträger zum Anheben der Säaggregate erst um eine Querachse nach oben verschwenkt werden, bevor die Querträger dann samt der Säaggregate nach vorne gekippt werden, sodass die Querträger in der Transportstellung parallel zueinander ausgerichtet sind und sich in Längsrichtungen erstrecken.

Beim Verkippen der Säaggregate kann es vorkommen, dass vergleichsweise große Mengen an Saatgut aus dem Vorratsbehälter des jeweiligen Säaggregats in das Gehäuse der Vereinzelungseinrichtung gelangt. Während des Transports kommt es somit zu einer Überfüllung der Vereinzelungseinrichtung mit Saatgut. Je kleiner und runder das Saatgut ist, desto fließfähiger ist es und desto eher wird die Vereinzelung in der Transportstellung mit Saatgut überfüllt. Dieser Effekt wird durch das Rütteln während einer Transportfahrt der Sämaschine noch verstärkt.

Nach dem Zurückklappen der Vereinzelungseinrichtungen in die Arbeitsstellung sind diese dann nicht direkt einsatzfähig und müssen zunächst manuell entleert werden. Wird eine entsprechende Entleerung nicht durchgeführt, kommt es zu einem unbeabsichtigten Austritt von Saatgut über den Schusskanal.

Um eine Überfüllung der Vereinzelungseinrichtungen mit Saatgut während einer Transportfahrt zu verhindern, werden im Stand der Technik klapp- bzw. kipprichtungsspezifische Vereinzelungseinrichtungen eingesetzt, bei denen die Überfüllung der Vereinzelungseinrichtung mit Saatgut beim Klappen bzw. Verkippen in eine Richtung konstruktiv vermieden wird. Da aufgrund der unterschiedlichen Klapp- bzw. Kipprichtungen an einer Sämaschine dann unterschiedliche Vereinzelungseinrichtungen verbaut werden müssen, kommt es zu einer hohen Teilevielfalt und somit zu einer erheblichen Steigerung der Herstellungskosten.

Die Druckschrift DE 10 2017 117 841 A1 schlägt zur Vermeidung einer Gehäuseüberfüllung mit Saatgut während einer Transportfahrt eine schräg gestellte Vereinzelungsscheibe vor, um baugleiche Vereinzelungseinrichtungen unabhängig von deren Klapprichtung verwenden zu können.

Diese und andere Lösungen zur Vermeidung der Überfüllung eines Gehäuses einer Vereinzelungseinrichtung mit Saatgut während des Einklappvorgangs und einer anschließenden Transportfahrt weisen entweder komplexe und/oder fehleranfällige Konstruktionen auf und/oder erlauben keine einfache Nachrüstung bei bereits am Markt befindlichen Sämaschinen.

Die der Erfindung zugrundeliegende Aufgabe besteht somit darin, die Gehäuseüberfüllung einer Vereinzelungseinrichtung mit Saatgut mit einer einfachen und gleichzeitig effektiven Lösung, welche vorzugsweise eine Nachrüstung ermöglicht, zu verhindern.

Die Aufgabe wird gelöst durch eine Vereinzelungseinrichtung der eingangs genannten Art, wobei der Einlasskanal der erfindungsgemäßen Vereinzelungseinrichtung einen Endbereich aufweist, welcher zumindest abschnittsweise zerstörungsfrei verformbar ist.

Dadurch, dass der Endbereich des Einlasskanals zerstörungsfrei verformbar ist, kann dieser so angeordnet werden, dass aus dem Vorratsbehälter nachrutschendes Saatgut auch in einer gekippten Transportstellung der Vereinzelungseinrichtung nur bedingt in das Gehäuse gelangen kann. In der Arbeitsstellung der Vereinzelungseinrichtung werden an dem Vereinzelungskörper anhaftende Saatkörner durch die Verformbarkeit des Endbereichs des Einlasskanals bei Kontakt mit dem verformbaren Endbereich nicht durch diesen abgestriffen, sodass die Vereinzelungsfunktion nicht beeinträchtigt wird. Die Anhaftkraft der Saatkörner an dem Vereinzelungskörper ist also größer als die Ablenkkraft, welche der verformbare Endbereich des Einlasskanals auf an dem Vereinzelungskörper anhaftende Saatkörner ausübt. Die an dem Vereinzelungskörper anhaftenden Saatkörner können sich beispielsweise in Kornaufnahmeausnehmungen des Vereinzelungskörpers befinden. Überschüssige und somit nur teilweise anhaftende Saatkörner werden jedoch von dem verformbaren Endbereich des Einlasskanals abgestriffen, da die Anhaftkraft der überschüssigen Saatkörner an dem Vereinzelungskörper geringer ist, als die von dem verformbaren Endbereich des Einlasskanals auf die Saatkörner ausgeübte Ablenkkraft. Eine Überfüllung der Vereinzelungseinrichtung mit Saatgut während eines Kippvorgangs und während einer Transportfahrt wird somit effektiv vermieden. Der Vereinzelungskörper der Vereinzelungseinrichtung kann dabei beispielsweise eine Vereinzelungsscheibe mit einer Vielzahl von Kornaufnahmeausnehmungen sein. Auf eine kostspielige Anpassung der Vereinzelungseinrichtungen an die jeweilige Klapp- bzw. Kipprichtung an der Sämaschine kann infolge dieser einfachen Weiterbildung des Einlasskanals verzichtet werden, so dass die Teilevielfalt und die Herstellkosten in zweckmäßiger Weise reduziert sind. Auch sind keine weiteren komplexen baulichen Änderungen notwendig sondern vielmehr ist eine einfache Vereinzelungseinrichtung in erfindungsgemäßer Ausführung dazu eingerichtet, eine Gehäuseüberfüllung zu vermeiden.

In einer bevorzugten Ausführungsform der erfindungsgemäßen Vereinzelungseinrichtung weist der Endbereich des Einlasskanals einen elastisch verformbaren Besatz auf. Der elastisch verformbare Besatz verhindert, dass eine große Menge an aus dem Vorratsbehälter nachrutschendem Saatgut in der gekippten Transportstellung der Vereinzelungseinrichtung in das Gehäuse gelangt. Gleichzeitig wird die Vereinzelungsfunktion in der Arbeitsstellung der Vereinzelungseinrichtung nicht durch den elastisch verformbaren Besatz beeinträchtigt. Der elastisch verformbare Besatz kann formschlüssig, kraftschlüssig und/oder stoffschlüssig mit einem Kanalsegment des Einlasskanals verbunden sein. Der elastisch verformbare Besatz kann beispielsweise auch zerstörungsfrei entnehmbar und/oder auswechselbar sein.

In einer weiteren bevorzugten Ausführungsform der erfindungsgemäßen Vereinzelungseinrichtung ist der Besatz ein Bürstenbesatz. Der Bürstenbesatz weist vorzugsweise ein Bürstenprofil auf, dessen Bürstenfront in Richtung des Vereinzelungskörpers ausgerichtet ist. Die Bürstenfront des Bürstenbesatzes kann auch mit dem Vereinzelungskörper in Kontakt stehen. Das Besatzmaterial kann beispielsweise Fasern, Borsten und/oder Haare umfassen. Alternativ kann der Besatz auch ein Lamellenbesatz sein. In diesem Fall kann der Besatz beispielsweise eine Vielzahl von elastisch verformbaren Kunststofflamellen aufweisen.

Die erfindungsgemäße Vereinzelungseinrichtung wird ferner dadurch vorteilhaft weitergebildet, dass der Besatz im Endbereich des Einlasskanals entlang seines Verlaufs eine konstante Besatzlänge aufweist. Vorzugsweise weisen sämtliche Fasern, Borsten und/oder Haare des Besatzes eine identische Länge auf. Dadurch, dass eine konstante Besatzlänge vorhanden ist, ist ein aufwendiges Ablängen, beispielsweise durch Zuschneiden, des Besatzes nicht erforderlich. Der Herstellungsaufwand für die Vereinzelungseinrichtung wird somit erheblich reduziert, sodass es auch zu verringerten Herstellungskosten kommt. Alternativ kann der Besatz entlang seines Verlaufs jedoch auch unterschiedliche Besatzlängen aufweisen.

In einer weiteren bevorzugten Ausführungsform der erfindungsgemäßen Vereinzelungseinrichtung erstreckt sich der Besatz von einem Besatzgrund in Richtung des Vereinzelungskörpers, wobei der Besatzgrund vorzugsweise eine unebene Besatzgrundkontur aufweist. Wenn der Besatz eine konstante Besatzlänge aufweist, ist die frontseitige Profilierung des Besatzes ebenfalls uneben. Die Besatzgrundkontur verläuft somit nicht in einer Ebene. Vorzugsweise verläuft auch die frontseitige Endkontur des Besatzes nicht in einer Ebene.

In einer weiteren bevorzugten Ausführungsform der erfindungsgemäßen Vereinzelungseinrichtung steht der Endbereich des Einlasskanals zumindest abschnittsweise mit dem Vereinzelungskörper in Kontakt. Vorzugsweise schließt der Endbereich zumindest abschnittsweise bündig an dem Vereinzelungskörper ab. Dadurch, dass der Endbereich des Einlasskanals zumindest abschnittsweise mit dem Vereinzelungskörper in Kontakt steht und/oder bündig mit diesem abschließt, wird ein unbeabsichtigter Saatgutaustritt in das Gehäuse der Vereinzelungseinrichtung während eines Klappvorgangs und während einer Transportfahrt effektiv vermieden, wobei über den elastisch verformbaren Endbereich des Einlasskanals eine Abstreiffunktion für überschüssiges Saatgut umgesetzt werden kann.

Es ist außerdem eine erfindungsgemäße Vereinzelungseinrichtung vorteilhaft, bei welcher der Endbereich des Einlasskanals eine unebene stirnseitige Endkontur aufweist. Die stirnseitige Endkontur verläuft vorzugsweise parallel zu der Besatzgrundkontur des sich im Endbereich des Einlasskanals befindenden elastisch verformbaren Besatzes.

In einer Weiterbildung der erfindungsgemäßen Vereinzelungseinrichtung ist die stirnseitige Endkontur des Endbereichs des Einlasskanals zumindest abschnittsweise an die Form des Vereinzelungskörpers angepasst. Der Vereinzelungskörper ist beispielsweise eine Vereinzelungsscheibe, welche zur Stabilitätssteigerung zumindest ein umlaufendes gekrümmtes oder gebogenes Scheibensegment aufweist. Die stirnseitige Endkontur des Endbereichs des Einlasskanals ist vorzugsweise an die Form des umlaufenden gekrümmten oder gebogenen Scheibensegments angepasst.

In einer anderen bevorzugten Ausführungsform der erfindungsgemäßen Vereinzelungseinrichtung weist der Endbereich des Einlasskanals eine seitliche Öffnung auf. Über die Öffnung können außerhalb des Einlasskanals von dem Vereinzelungskörper abgestriffene Saatkörner wieder in den Einlasskanal gelangen. Die Öffnung ist vorzugsweise beabstandet von der Innenmantelfläche des Gehäuses, sodass in dem Gehäuse außerhalb des Einlasskanals zunächst ein gewissen Füllstand erreicht werden muss, bevor Saatkörner über die Öffnung zurück in den Einlasskanal gelangen können.

Es ist außerdem eine erfindungsgemäße Vereinzelungseinrichtung bevorzugt, bei welcher der Endbereich des Einlasskanals Bestandteil eines zerstörungsfrei lösbaren und vorzugsweise auswechselbaren Kornführungseinsatzes ist. Der Kornführungseinsatz kann ein bogenförmiges Bürstenteil mit einem Bürstenbesatz sein. Das bogenförmige Bürstenteil kann einen Trägerkörper aus Kunststoff aufweisen, an welchem der Besatz befestigt ist. Der Kornführungseinsatz kann beispielsweise gelöst werden, um Reparatur- oder Wartungsarbeiten an der Vereinzelungseinrichtung durchführen zu können. Ferner kann der Kornführungseinsatz ein saatgutsortenspezifischer Kornführungseinsatz sein, sodass die Austauschbarkeit des Kornführungseinsatzes das Vereinzeln von unterschiedlichen Saatgutsorten mittels der Vereinzelungseinrichtung erlaubt. Der Kornführungseinsatz ist vorzugsweise nachrüstbar, sodass Vereinzelungseinrichtungen ohne einen entsprechenden Kornführungseinsatz nachträglich mit einem verformbaren Endbereich für den Einlasskanal ausgestattet werden können.

In einer bevorzugten Ausführungsform der erfindungsgemäßen Vereinzelungseinrichtung ist der Kornführungseinsatz form- und/oder kraftschlüssig an einem Befestigungsabschnitt des Gehäuses befestigt. Der Kornführungseinsatz kann beispielsweise werkzeuglos montierbar und/oder demontierbar sein. Ferner kann der Kornführungseinsatz einklipsbar sein. Beispielsweise umfasst der Kornführungseinsatz und/oder der Befestigungsabschnitt des Gehäuses ein oder mehrere elastisch verformbare Haken, über welche beispielsweise eine Schnappverbindung realisierbar ist.

Es ist außerdem eine erfindungsgemäße Vereinzelungseinrichtung vorteilhaft, bei welcher der Vereinzelungskörper scheibenförmig ausgebildet ist und eine, insbesondere umlaufende, Mulde aufweist, wobei der Einlasskanal auf einen Teilbereich der Mulde ausgerichtet ist. Die Mulde ist ein gekrümmtes oder bogenförmiges umlaufendes Scheibensegment, welches die Formstabilität des scheibenförmig ausgebildeten Vereinzelungskörpers erhöht. Vorzugsweise weist die Mulde eine Muldenkontur auf, wobei die stirnseitige Endkontur des Einlasskanals eine Gegenkontur der Muldenkontur ist.

In einer anderen bevorzugten Ausführungsform der erfindungsgemäßen Vereinzelungseinrichtung ragt der Einlasskanal in die Mulde des Vereinzelungskörpers hinein. Auf diese Weise wird ein äußerst stabiler Vereinzelungsmechanismus geschaffen, bei welchem auch nach einer längeren Transportfahrt keine Saatgutentleerung des Gehäuses erforderlich ist.

Die der Erfindung zugrundeliegende Aufgabe wird ferner durch eine Sämaschine der eingangs genannten Art gelöst, wobei die Vereinzelungseinrichtung des zumindest einen Säaggregats nach einer der vorstehend beschriebenen Ausführungsformen ausgebildet ist. Hinsichtlich der Vorteile und Modifikationen der erfindungsgemäßen Sämaschine wird somit zunächst auf die Vorteile und Modifikationen der erfindungsgemäßen Vereinzelungseinrichtung verwiesen.

In einer bevorzugten Ausführungsform weist die erfindungsgemäße Sämaschine eine erste Gruppe von Säaggregaten und eine zweite Gruppe von Säaggregaten auf. Die Säaggregate der ersten Gruppe sind dazu eingerichtet, zum Verbringen von einer Arbeitsstellung in eine Transportstellung in eine erste Richtung gekippt zu werden. Die Säaggregate der zweiten Gruppe sind dazu eingerichtet, zum Verbringen von einer Arbeitsstellung in eine Transportstellung in eine zweite Richtung gekippt zu werden. Die Vereinzelungseinrichtungen der Säaggregate der ersten Gruppe sind vorzugsweise nach einer der vorstehend beschriebenen Ausführungsformen ausgebildet.

Die Säaggregate der ersten Gruppe und die Säaggregate der zweiten Gruppe weisen jeweils eine Vereinzelungseinrichtung zum Vereinzeln von Saatkörnern auf. Beim Verbringen der Säaggregate von der Arbeitsstellung in die Transportstellung werden die Säaggregate vorzugsweise um 90 Grad gekippt.

Die erfindungsgemäße Sämaschine wird ferner dadurch vorteilhaft weitergebildet, dass die Säaggregate der zweiten Gruppe jeweils ein Gehäuse aufweisen, in welchem ein rotierend antreibbarer Vereinzelungskörper angeordnet ist und welches einen Einlasskanal aufweist, über welchen dem Vereinzelungskörper in das Gehäuse eingeleitete Saatkörner zuleitbar sind, wobei der Einlasskanal keinen zerstörungsfrei verformbaren Endbereich aufweist. Vorzugsweise weisen die Vereinzelungseinrichtungen der ersten Gruppe von Säaggregaten einen Kornführungseinsatz auf und die Vereinzelungseinrichtungen der zweiten Gruppe von Säaggregaten weisen keinen Kornführungseinsatz auf. Vorzugsweise sind die Vereinzelungseinrichtungen der ersten Gruppe von Säaggregaten und die Vereinzelungseinrichtungen der zweiten Gruppe von Säaggregaten mit Ausnahme des Kornführungseinsatzes baugleich.

In einer alternativen Ausführungsform der erfindungsgemäßen Sämaschine werden die Säaggregate einer ersten Gruppe und die Säaggregate einer zweiten Gruppe beim Einklappen von Querträgern der Sämaschine zunächst um eine Querachse nach oben verschwenkt, sodass die Säaggregate durch die Schwenkbewegung angehoben werden. Nachfolgend werden dann die Querträger und die an den Querträgern befestigten Säaggregate nach vorne gekippt, sodass die Querträger in der Transportstellung parallel ausgerichtet sind und sich in Längsrichtung erstrecken. Auch bei dieser Art der Säaggregatverkippung ist ein unbeabsichtigtes Nachrutschen von Saatgut in das Gehäuse der Vereinzelungseinrichtung während des Kippvorgangs und während einer nachfolgenden Transportfahrt zu verhindern.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Maschinenverbund mit einer erfindungsgemäßen Sämaschine in einer perspektivischen Darstellung, wobei sich die Säaggregate in einer Arbeitsstellung befinden;
- Fig. 2: den in der Fig. 1 abgebildeten Maschinenverbund in einer Ansicht von hinten, wobei sich die Säaggregate der Sämaschine in einer Transportstellung befinden;
- Fig. 3: eine Vereinzelungseinrichtung in einer schematischen Schnittdarstellung;
- Fig. 4: einen Bereich einer erfindungsgemäßen Vereinzelungseinrichtung in einer schematischen Schnittdarstellung;
- Fig. 5: ein Ausführungsbeispiel der erfindungsgemäßen Vereinzelungseinrichtung in einer Explosionsdarstellung;
- Fig. 6: die in der Fig. 5 abgebildete Vereinzelungseinrichtung mit einem geöffneten Gehäuse in einer perspektivischen Darstellung; und
- Fig. 7: einen Kornführungseinsatz einer erfindungsgemäßen Vereinzelungseinrichtung in einer schematischen Darstellung.

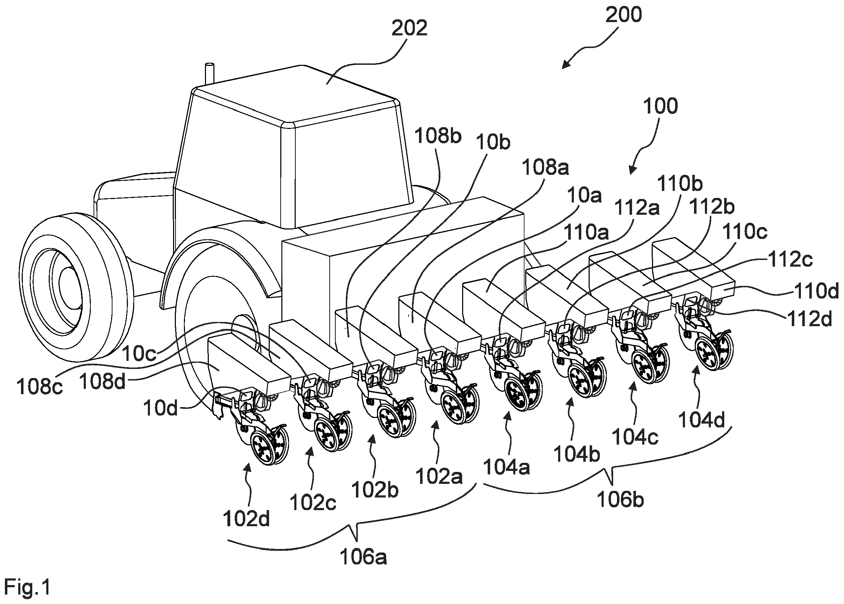

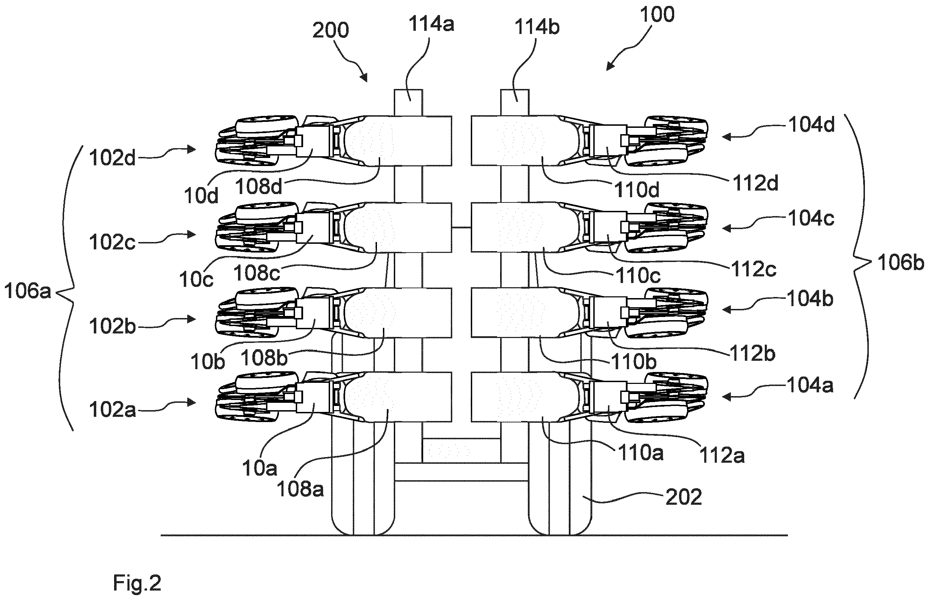

Die Fig. 1 und 2 zeigen einen Maschinenverbund 200 mit einem Traktor 202 und einer von dem Traktor 202 getragenen Sämaschine 100.

Die Sämaschine 100 weist eine erste Gruppe 106a von Säaggregaten 102a-102d und eine zweite Gruppe 106b an Säaggregaten 104a-104d auf. Die Säaggregate 102a-102d der ersten Gruppe 106a sind an einem Querträger 114a befestigt. Die Säaggregate 104a-104d der zweiten Gruppe 106b sind an einem Querträger 114b befestigt. Die Säaggregate 102a-102d weisen jeweils einen Vorratsbehälter 108a-108d für Saatgut S und eine Vereinzelungseinrichtung 10a-10d zum Vereinzeln von Saatkörnern K auf. Die Säaggregate 104a-104d weisen jeweils einen Vorratsbehälter 110a-110d für Saatgut S und eine Vereinzelungseinrichtung 112a-112d zum Vereinzeln von Saatkörnern Kauf.

Die Säaggregate 102a-102d, 104a-104d können in eine Arbeitsstellung und in eine Transportstellung verbracht werden.

Die Fig. 1 zeigt die Sämaschine 100, wobei sich die Säaggregate 102a-102d, 104a-104d in der Arbeitsstellung befinden. In der Arbeitsstellung sind die Säaggregate 102a-102d, 104a-104d aufrecht ausgerichtet und äquidistant voneinander beabstandet. Zum Verbringen der Säaggregate 102a-102d, 104a-104d sind die Querträger 114a, 114b, an welchen die Säaggregate 102a-102d, 104a-104d befestigt sind, von einer horizontalen Ausrichtung in eine vertikale Ausrichtung zu verschwenken. Bei diesem Einklappvorgang werden die Säaggregate 102a-102d der ersten Gruppe 106a in eine erste Richtung verkippt und die Säaggregate 104a-104d der zweiten Gruppe 106b in eine zweite Richtung verkippt.

Die Fig. 2 zeigt die Sämaschine 100, wobei sich die Säaggregate 102a-102d, 104a-104d in der Transportstellung befinden. Die Darstellung verdeutlicht, dass die Säaggregate 102a-102d der ersten Gruppe 106a und die Säaggregate 104a-104d der zweiten Gruppe 106b nach Abschluss des Einklappvorgangs unterschiedliche Ausrichtungen aufweisen. In der Praxis hat sich gezeigt, dass beim Verkippen der Säaggregate 102a-102d der ersten Gruppe 106a und bei der anschließenden Transportfahrt vergleichsweise große Mengen an Saatgut S aus dem Vorratsbehälter 108a-108d des jeweiligen Säaggregats 102a-102d in das Gehäuse der jeweiligen Vereinzelungseinrichtung 10a-10d gelangen können. Während des Transports kann es dann zu einer Überfüllung der Vereinzelungseinrichtung 10a-10d mit Saatgut S kommen, sodass nach dem Zurückklappen der Säaggregate 102a-102d in die Arbeitsstellung eine Entleerung der Vereinzelungseinrichtung 10a-10d erfolgen muss, bevor die Sämaschine 100 einsatzbereit ist.

Konstruktionsbedingt erfolgt das übermäßige Einströmen von Saatgut S in die Vereinzelungseinrichtungen 10a-10d lediglich bei Verkippung der Vereinzelungseinrichtungen 10a-10d in eine spezifische Richtung. Somit besteht in dem vorliegenden Ausführungsbeispiel die Überfüllungsproblematik bei den Vereinzelungseinrichtungen 112a-112d der Säaggregate 104a-104d der Gruppe 106b nicht.

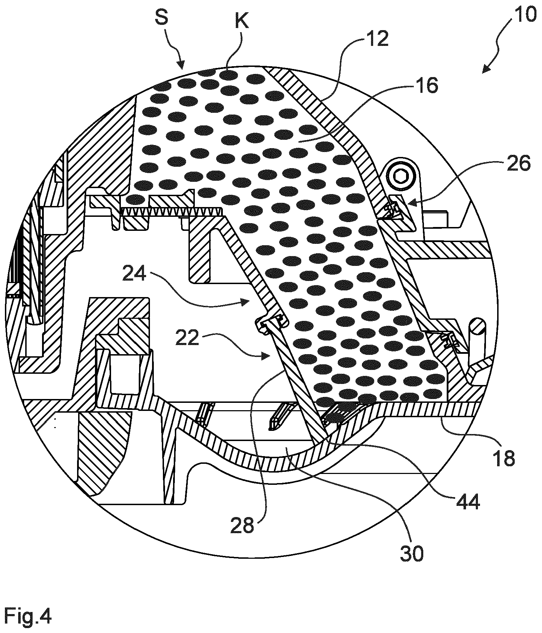

Die Vereinzelungseinrichtungen 10a-10d weisen jeweils einen Einlasskanal 16 auf, über welchen in die jeweilige Vereinzelungseinrichtung 10a-10d eingeleitete Saatkörner K einem rotierend antreibbaren Vereinzelungskörper 18 zuleitbar sind. Zur Verhinderung einer Überfüllung weisen die Einlasskanäle 16 der Vereinzelungseinrichtungen 10a-10d einen Endbereich 22 auf, welcher zerstörungsfrei verformbar ist. Dieses Merkmal wird später unter Bezugnahme auf die Fig. 4 bis 7 näher erläutert.

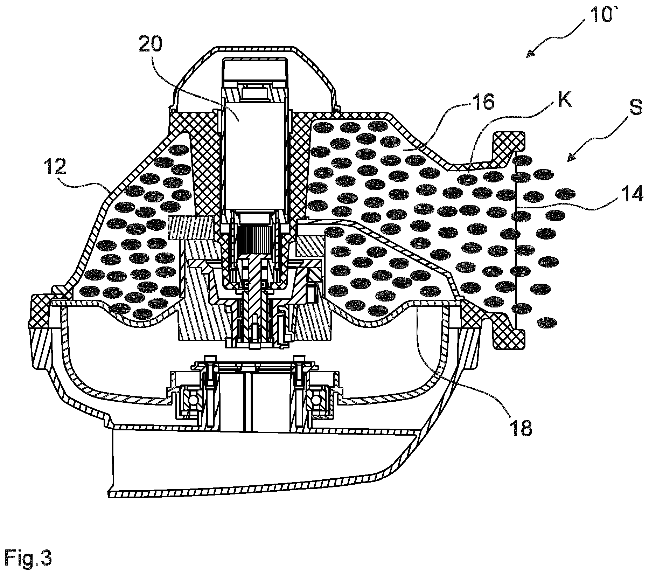

Die Fig. 3 zeigt eine Vereinzelungseinrichtung 10' im gekippten Zustand, wobei die Vereinzelungseinrichtung 10' konstruktiv nicht gegenüber einer Überfüllung des Gehäuses 12 mit Saatgut S während einer Transportfahrt geschützt ist. Die Vereinzelungseinrichtung 10' weist einen als Vereinzelungsscheibe ausgebildeten Vereinzelungskörper 18 auf, welcher in einem Gehäuse 12 angeordnet und von einem Scheibenantrieb 20 rotatorisch antreibbar ist.

Das über die Einlassöffnung 14 des Gehäuses 12 in die Vereinzelungseinrichtung 10' einströmende Saatgut S wird über einen Einlasskanal 16 dem Vereinzelungskörper 18 zugeleitet. Während des Verkippens von einer aufrechten Arbeitsstellung in die dargestellte Transportstellung und bei einer nachfolgenden Transportfahrt füllt sich das Gehäuse 12 der Vereinzelungseinrichtung 10' nach und nach mit Saatgut S, welches aus dem vorgeschalteten Vorratsbehälter in die Vereinzelungseinrichtung 10' nachrutscht.

Die Fig. 4 bis 6 zeigen eine Vereinzelungseinrichtung 10, bei welcher die konstruktive Ausgestaltung des Einlasskanals 16 eine Überfüllung des Gehäuses 12 der Vereinzelungseinrichtung 10 mit Saatgut während einer Kippvorgangs und einer nachfolgenden Transportfahrt verhindert. Der Einlasskanal 16 weist einen Endbereich 22 auf, welcher zerstörungsfrei verformbar ist. Der Endbereich 22 des Einlasskanals 16 ist dabei Bestandteil eines zerstörungsfrei lösbaren und auswechselbaren Kornführungseinsatzes 24, welcher an einem Befestigungsabschnitt 26 des Gehäuses 12 befestigt ist. Der Kornführungseinsatz 24 ist vorliegend als nachrüstbarer Kornführungseinsatz ausgebildet.

Der Kornführungseinsatz 24 weist einen elastisch verformbaren Besatz 28, wobei der Besatz 28 in der dargestellten Ausführungsform ein Bürstenbesatz mit einer Vielzahl von Borsten, Fasern oder Haaren ist. Alternativ kann der Besatz 28 jedoch auch ein Lamellenbesatz mit einer Vielzahl von elastisch verformbaren Kunststofflamellen sein.

Dadurch, dass sich der Bürstenbesatz 28 bis auf den scheibenförmigen Vereinzelungskörper 18 erstreckt, sammelt sich das aus dem Vorratsbehälter nachrutschende Saatgut S im Endbereich 22 des Einlasskanals 16. Eine Überfüllung des Gehäuses 12 der Vereinzelungseinrichtung 10 jenseits des Einlasskanals 16 wird somit effektiv durch den Bürstenbesatz 28 vermieden.

Trotzdem wird die Vereinzelungsfunktion der Vereinzelungseinrichtung 10 in der Arbeitsstellung der Vereinzelungseinrichtung 10 nicht beeinträchtigt. Die an dem Vereinzelungskörper 18 anhaftenden Saatkörner K werden aufgrund der elastischen Verformbarkeit des Bürstenbesatzes 28 bei Kontakt mit dem Bürstenbesatz 28 nicht durch diesen abgestriffen, da die von dem Bürstenbesatz 28 auf die an dem Vereinzelungskörper anhaftenden Saatkörner K aufgebrachte Ablenkkraft kleiner als die Anhaftkraft ist, welche die Saatkörner K an dem Vereinzelungskörper 18 hält.

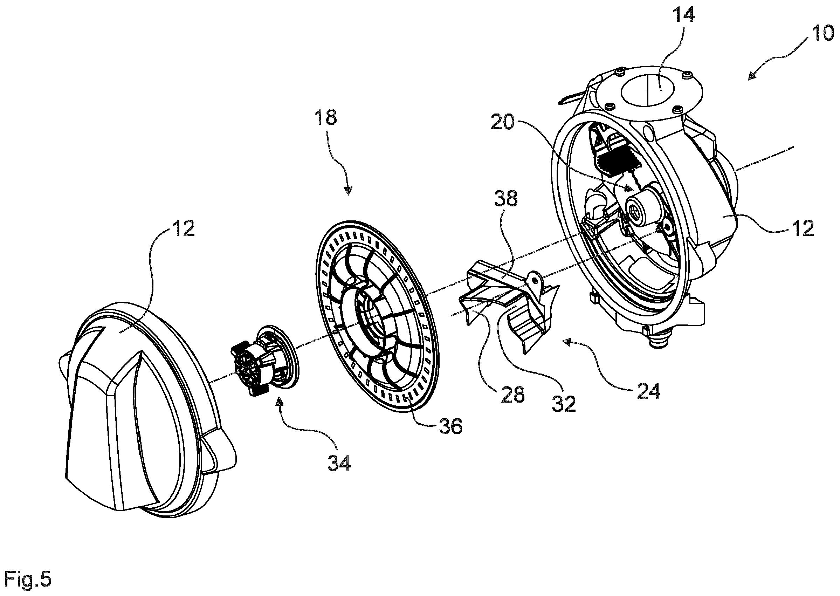

Die Fig. 5 zeigt, dass der scheibenförmige Vereinzelungskörper 18 eine Vielzahl von Kornaufnahmeausnehmungen 36 aufweist. Die an dem Vereinzelungskörper 18 anhaftenden Saatkörner K befinden sich während des Vereinzelungsvorgangs in den Kornaufnahmeausnehmungen 36 des Vereinzelungskörpers 18. Überschüssige Saatkörner K, welche sich nicht vollständig in einer Kornaufnahmeausnehmung 36 befinden, werden von dem Bürstenbesatz 28 während des Vereinzelungsprozesses abgestriffen, da in diesem Fall die von dem Bürstenbesatz 28 auf die überschüssigen Saatkörner K aufgebrachte Ablenkkraft größer ist als die Anhaftkraft der Saatkörner K an dem Vereinzelungskörper 18.

Die stirnseitige Endkontur 44 des Besatzes 28 kann mit dem Vereinzelungskörper 18 in Kontakt stehen oder bündig an dem Vereinzelungskörper 18 abschließen. In dem dargestellten Ausführungsbeispiel ist die stirnseitige Endkontur 44 des Endbereichs 22 des Einlasskanals 16 und somit die stirnseitige Endkontur des Besatzes 28 an die Form des Vereinzelungskörpers 18 angepasst. Der scheibenförmige Vereinzelungskörper 18 weist eine umlaufende Mulde 30 auf, wobei der Besatz 28 in die Mulde 30 des Vereinzelungskörpers 18 hineinragt. Die umlaufende Mulde 30 dient zur Steigerung der Stabilität des scheibenförmigen Vereinzelungskörpers 18.

Das Gehäuse 12 kann, wie in der Fig. 5 dargestellt, beispielsweise zweiteilig ausgebildet sein. Der Vereinzelungskörper 18 ist über einen Montagekörper 34 mit dem Antrieb 20 der Vereinzelungseinrichtung 10 verbunden. Der Antrieb 20 kann beispielsweise ein Elektromotor sein. Alternativ kann der Antrieb 20 auch ein pneumatischer oder hydraulischer Antrieb sein.

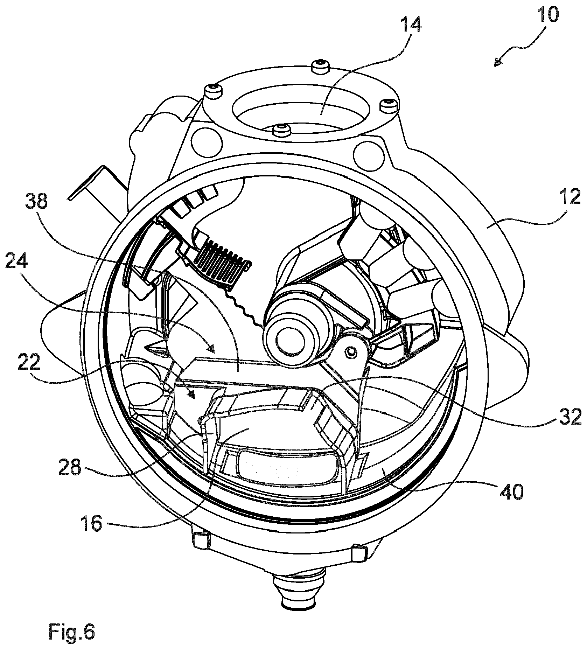

Die Fig. 6 zeigt, dass der Besatz 28 eine seitliche Öffnung 32 aufweist. Über die Öffnung 32 können außerhalb des Einlasskanals 16 von dem Vereinzelungskörper 18 abgestriffene Saatkörner K wieder in den Einlasskanal 16 gelangen. Dadurch, dass die Öffnung 32 beabstandet von der Innenmantelfläche 40 des Gehäuses 12 ist, muss in dem Gehäuse 12 außerhalb des Einlasskanals 16 zunächst ein gewisser Füllstand an Saatgut S erreicht werden, bevor Saatkörner K über die Öffnung 32 zurück in den Einlasskanal 16 gelangen können.

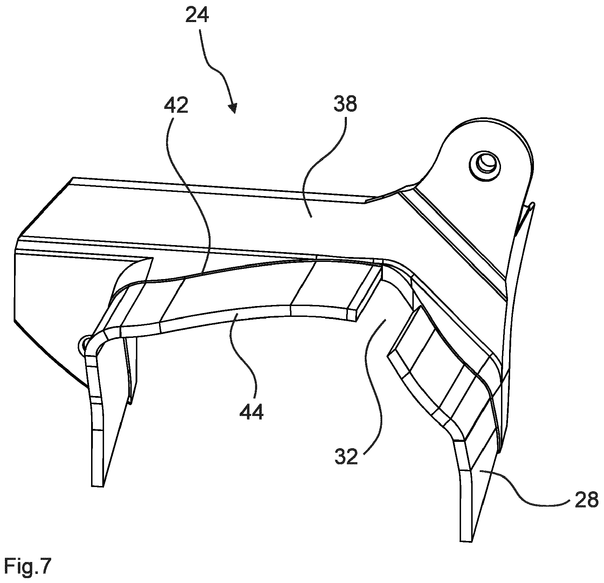

Die Fig. 7 zeigt einen Kornführungseinsatz 24 mit einem aus Kunststoff ausgebildeten Trägerkörper 38. An dem Trägerkörper 38 ist der als Bürstenbesatz ausgebildete Besatz 28 befestigt. Der Besatz 28 weist entlang seines Verlaufs eine konstante Besatzlänge auf, sodass sämtliche Fasern, Borsten und/oder Haare des Besatzes 28 eine identische Länge aufweisen. Der Besatz 28 erstreckt sich von einem Besatzgrund 42 von dem Trägerkörper 38 weg. Ferner weist der Besatz 28 eine stirnseitige Endkontur 44 auf. Die Kontur des Besatzgrundes 42 und die stirnseitige Endkontur 44 sind jeweils unebene Konturen und verlaufen nicht in einer Ebene. Dadurch kann erreicht werden, dass trotz einer konstanten Besatzlänge, bei welcher sämtliche Fasern, Borsten und/oder Haare eine identische Länge aufweisen, eine stirnseitige Endkontur 44 geschaffen werden kann, welche an die Oberflächenkontur des Vereinzelungskörpers 18 angepasst ist.

### Bezugszeichen

- 10, 10a-10d: Vereinzelungseinrichtungen
- 10': Vereinzelungseinrichtung
- 12: Gehäuse
- 14: Einlassöffnung
- 16: Einlasskanal
- 18: Vereinzelungskörper
- 20: Antrieb
- 22: Endbereich
- 24: Kornführungseinsatz
- 26: Befestigungsabschnitt
- 28: Besatz
- 30: Mulde
- 32: Öffnung
- 34: Montagekörper
- 36: Kornaufnahmeausnehmungen
- 38: Trägerkörper
- 40: Innenmantelfläche
- 42: Besatzgrund
- 44: Endkontur

- 100: Sämaschine
- 102a-102d: Säaggregate
- 104a-104d: Säaggregate
- 106a, 106b: Gruppen
- 108a-108d: Vorratsbehälter
- 110a-110d: Vorratsbehälter
- 112a-112d: Vereinzelungseinrichtungen
- 114a, 114b: Querträger

- 200: Maschinenverbund
- 202: Traktor
- S: Saatgut
- K: Saatkörner

## Patentansprüche

1. Vereinzelungseinrichtung (10, 10a-10d) zum Vereinzeln von Saatkörnern (K), mit
- einem rotierend antreibbaren Vereinzelungskörper (18); und
- einem Gehäuse (12), in welchem der Vereinzelungskörper (18) angeordnet ist und welches einen Einlasskanal (16) aufweist, über welchen dem Vereinzelungskörper (18) in das Gehäuse (12) eingeleitete Saatkörner (K) zuleitbar sind;
**dadurch gekennzeichnet, dass** der Einlasskanal (16) einen Endbereich (22) aufweist, welcher zumindest abschnittsweise zerstörungsfrei verformbar ist.

2. Vereinzelungseinrichtung (10, 10a-10d) nach Anspruch 1,
**dadurch gekennzeichnet, dass** der Endbereich (22) des Einlasskanals (16) einen elastisch verformbaren Besatz (28) aufweist.

3. Vereinzelungseinrichtung (10, 10a-10d) nach Anspruch 2,
**dadurch gekennzeichnet, dass** der Besatz (28) ein Bürstenbesatz ist.

4. Vereinzelungseinrichtung (10, 10a-10d) nach Anspruch 2 oder 3,
**dadurch gekennzeichnet, dass** der Besatz (28) im Endbereich (22) des Einlasskanals (16) entlang seines Verlaufs eine konstante Besatzlänge aufweist.

5. Vereinzelungseinrichtung (10, 10a-10d) nach einem der Ansprüche 2 bis 4,
**dadurch gekennzeichnet, dass** der Besatz (28) sich von einem Besatzgrund (42) in Richtung des Vereinzelungskörpers (18) erstreckt, wobei der Besatzgrund (42) vorzugsweise eine unebene Besatzgrundkontur aufweist.

6. Vereinzelungseinrichtung (10, 10a-10d) nach einem der vorstehenden Ansprüche,
**dadurch gekennzeichnet, dass** der Endbereich (22) des Einlasskanals (16) zumindest abschnittsweise mit dem Vereinzelungskörper (18) in Kontakt steht.

7. Vereinzelungseinrichtung (10, 10a-10d) nach einem der vorstehenden Ansprüche,
**dadurch gekennzeichnet, dass** der Endbereich (22) des Einlasskanals (16) eine unebene stirnseitige Endkontur (44) aufweist.

8. Vereinzelungseinrichtung (10, 10a-10d) nach Anspruch 7,
**dadurch gekennzeichnet, dass** die stirnseitige Endkontur (44) des Endbereichs (22) des Einlasskanals (16) zumindest abschnittsweise an die Form des Vereinzelungskörpers (18) angepasst ist.

9. Vereinzelungseinrichtung (10, 10a-10d) nach einem der vorstehenden Ansprüche,
**dadurch gekennzeichnet, dass** der Endbereich (22) des Einlasskanals (16) eine seitliche Öffnung (32) aufweist.

10. Vereinzelungseinrichtung (10, 10a-10d) nach einem der vorstehenden Ansprüche,
**dadurch gekennzeichnet, dass** der Endbereich (22) des Einlasskanals (16) Bestandteil eines zerstörungsfrei lösbaren und vorzugsweise auswechselbaren Kornführungseinsatzes (24) ist.

11. Vereinzelungseinrichtung (10, 10a-10d) nach Anspruch 10,
**dadurch gekennzeichnet, dass** der Kornführungseinsatz (24) form- und/oder kraftschlüssig an einem Befestigungsabschnitt (26) des Gehäuses (12) befestigt ist.

12. Vereinzelungseinrichtung (10, 10a-10d) nach einem der vorstehenden Ansprüche,
**dadurch gekennzeichnet, dass** der Vereinzelungskörper (18) scheibenförmig ausgebildet ist und eine, insbesondere umlaufende, Mulde (30) aufweist, wobei der Einlasskanal (16) auf einen Teilbereich der Mulde (30) ausgerichtet ist.

13. Vereinzelungseinrichtung (10, 10a-10d) nach Anspruch 12,
**dadurch gekennzeichnet, dass** der Einlasskanal (16) in die Mulde (30) des Vereinzelungskörpers (18) hineinragt.

14. Sämaschine (100), mit
- zumindest einem Säaggregat (102a-102d), welches dazu eingerichtet ist, zum Verbringen von einer Arbeitsstellung in eine Transportstellung gekippt zu werden, wobei das zumindest eine Säaggregat (102a-102d) eine Vereinzelungseinrichtung (10, 10a-10d) zum Vereinzeln von Saatkörnern (K) aufweist,
**dadurch gekennzeichnet, dass** die Vereinzelungseinrichtung (10, 10a-10d) des zumindest einen Säaggregats (102a-102d) nach einem der verstehenden Ansprüchen ausgebildet ist.

15. Sämaschine (100) nach Anspruch 14, mit
- einer ersten Gruppe (106a) von Säaggregaten (102a-102d), welche dazu eingerichtet sind, zum Verbringen von einer Arbeitsstellung in eine Transportstellung in eine erste Richtung gekippt zu werden; und
- einer zweiten Gruppe (106b) von Säaggregaten (104a-104d), welche dazu eingerichtet sind, zum Verbringen von einer Arbeitsstellung in eine Transportstellung in eine zweite Richtung gekippt zu werden;
**dadurch gekennzeichnet, dass** die Vereinzelungseinrichtungen (10a-10d) der Säaggregate (102a-102d) der ersten Gruppe (106a) nach einem der Ansprüche 1 bis 13 ausgebildet sind.

16. Sämaschine (100) nach Anspruch 15,
**dadurch gekennzeichnet, dass** die Säaggregate (104a-104d) der zweiten Gruppe (106b) jeweils ein Gehäuse (12) aufweisen, in welchem ein rotierend antreibbarer Vereinzelungskörper (18) angeordnet ist und welches einen Einlasskanal (16) aufweist, über welchen dem Vereinzelungskörper (18) in das Gehäuse (12) eingeleitete Saatkörner (K) zuleitbar sind, wobei der Einlasskanal (16) keinen zerstörungsfrei verformbaren Endbereich (22) aufweist.
